# FASCICULE DE BREVET EUROPEEN

(11) **EP 1 987 239 B1**
(45) Date de publication et mention de la délivrance du brevet: **01.07.2009**
(21) Numéro de dépôt: 07731562.0
(22) Date de dépôt: 01.02.2007
(51) Int. Cl.: F01N 9/00, F01N 3/025

(54) **PROCEDE ET DISPOSITIF DE REGENERATION DU FILTRE A PARTICULES D'UN MOTEUR A COMBUSTION INTERNE, PENDANT LES PHASES TRANSITOIRES DE FONCTIONNEMENT DE CELUI-CI**
VERFAHREN UND VORRICHTUNG ZUR REGENERIERUNG DES PARTIKELFILTERS EINES VERBRENNUNGSMOTORS WÄHREND DESSEN LASTWECHSELN
METHOD AND DEVICE FOR REGENERATING THE PARTICLE FILTER OF AN INTERNAL COMBUSTION ENGINE DURING THE TRANSIENT OPERATING PHASES THEREOF

(30) Priorité: 20.02.2006 FR 0601458
(43) Date de publication de la demande: 05.11.2008
(73) Titulaire: Renault SAS, 92100 Boulogne Billancourt (FR)
(72) Inventeur: DANEAU, Marc, F-92100 Boulogne Billancourt (FR)
(74) Mandataire: Guyon, Rodolphe C.
(86) Numéro de dépôt international: PCT/FR2007/050734
(87) Numéro de publication internationale: WO 2007/096544

(56) Documents cités:
- EP-A- 1 245 814
- EP-A- 1 577 524
- US-A- 5 193 340
- US-A1- 2004 204 818
- PATENT ABSTRACTS OF JAPAN vol. 018, no. 671 (M-1726), 19 décembre 1994 (1994-12-19) & JP 06 264720 A (NISSAN MOTOR CO LTD), 20 septembre 1994 (1994-09-20)

## Description

La présente invention concerne un procédé et un dispositif de régénération du filtre à particules placé sur la ligne d'échappement d'un moteur à combustion interne du type diesel.

En raison des normes de dépollution de plus en plus exigeantes, les filtres à particules se généralisent sur les véhicules automobiles. Ces filtres à particules permettent de filtrer les gaz d'échappement des moteurs à combustion interne et retiennent les particules nocive. Il est nécessaire de régénérer ces filtres à particules à intervalle régulier afin d'éviter qu'ils se colmatent et empêchent un fonctionnement correct du moteur.

Une solution connue pour effectuer la régénération décrite notamment dans l'US 2004/204818 A1 consiste à disposer un injecteur de gasole directement sur la ligne d'échappement. Lors de la régénération cet injecteur injecte du gasole dans la ligne d'échappement. Le gasole réagit dans un catalyseur d'oxydation et produit de la chaleur. Cette chaleur permet de chauffer le filtre à particules à une température de l'ordre de 650°C permettant la combustion des particules retenues dans le filtre.

Dans le dispositif décrit dans ce document le catalyseur d'oxydation est disposé en amont du filtre à particules et l'injecteur de gasole est placé en amont du catalyseur d'oxydation.

Le processus de régénération du filtre à particules, c'est-à-dire l'injection de gasole dans la ligne d'échappement, est déclenché lorsque la perte de charge provoquée par la présence des particules dans le filtre atteint un certain seuil. Cette perte de charge est mesurée au moyen de capteurs de pression placés en amont et en aval du filtre à particules.

Une autre solution est connue du document US 5,193, 340 A.

Dans la réalisation décrite dans la demande de brevet FR0453187 du 23 décembre 2004, le dispositif de dépollution comprend deux catalyseurs d'oxydation, le premier étant situé près du moteur à combustion interne et le second près du filtre à particules.

Cependant, il a été constaté que le volume du second catalyseur d'oxydation était insuffisant pour pouvoir utiliser l'injecteur à l'échappement sur toute la plage de fonctionnement du moteur. Au-delà de certaines limites de charge et de régime du moteur, le catalyseur n'est plus en mesure de traiter le gasole injecté par l'injecteur à l'échappement. Cela se traduit par trois phénomènes non désirables :
1. Il n'est plus possible de maintenir la température de 650°C dans le catalyseur. Si la température devient inférieure à 580°C, il n'est plus possible de maintenir la régénération.
2. La quantité d'hydrocarbures imbrûlés en entrée du filtre augmente considérablement. Si le filtre à particule est à une température supérieure à 620°C, cet apport massif d'hydrocarbures peut entraîner l'emballement de la régénération des suies présentes et éventuellement la destruction du filtre à particules en raison de contraintes thermomécaniques trop importantes.
3. Si le filtre est relativement froid, les hydrocarbures imbrûlés ne sont pas traités par le filtre et se retrouvent directement à l'échappement, générant des mauvaises odeurs, des fumées blanches et de la pollution.

Pour remédier à ces problèmes, la Demanderesse a décrit dans une demande de brevet déposée en même temps que la présente demande, un procédé dans lequel, lors de la régénération :
- l'injection de carburant dans le tube d'échappement est interrompue lorsque le fonctionnement du moteur entre dans une zone critique définie par des limites maximales de charge et de régime,
- l'injection de carburant est de nouveau rétablie lorsque le fonctionnement du moteur revient dans une zone non critique.

De plus, selon ce procédé, la température de consigne à l'entrée du catalyseur d'oxydation est réglée à 250-550°C lorsque le fonctionnement du moteur n'est pas dans la zone critique et cette température est réglée à 650°C lorsque le moteur est dans la zone critique.

Ce procédé permet de garantir la régénération du filtre à particules sur l'ensemble de la plage de fonctionnement du moteur. Cependant, lors d'une utilisation très transitoire du véhicule, on observe, à la sortie du catalyseur, des pics d'hydrocarbures imbrûlés très supérieurs au niveau attendu en régime établi, ce qui peut aboutir à des emballements de la régénération du filtre à particules et éventuellement à sa destruction. Ces pics sont par ailleurs indésirables pour le respect des normes de dépollution.

Le but de l'invention est de remédier à ces inconvénients.

Suivant l'invention, on atteint ce but de l'invention on moyen d'un procédé de régénération du filtre à particules placé sur la ligne d'échappement d'un moteur à combustion interne, dans lequel, pendant la régénération du filtre à particules, du carburant est injecté dans le tube d'échappement en amont d'un catalyseur d'oxydation disposé en amont du filtre à particules. Ce procédé est **caractérisé en ce que**, lors de la régénération :
- l'injection de carburant dans le tube d'échappement est interrompue lorsque le fonctionnement du moteur entre dans une zone critique définie par des limites maximales de charge et de régime,
- l'injection de carburant est de nouveau rétablie lorsque le fonctionnement du moteur revient dans une zone non critique,
- lors des phases de fonctionnement transitoires entre les deux zones on mesure le débit volumique des gaz d'échappement, et, en fonction de cette mesure, on réduit le débit d'injection de carburant ou on diffère l'injection de carburant.

Ce procédé permet d'éviter les pics d'hydrocarbures imbrûlés lors des phases transitoires précitées.

Dans un premier mode du procédé, on rétablit l'injection de carburant une fois le débit volumique des gaz d'échappement revenu en-dessous d'un seuil prédéterminé.

Dans un second mode du procédé, on applique une correction sur le débit maximum d'injection de carburant en fonction du débit volumique des gaz d'échappement.

Selon un autre aspect, l'invention concerne un dispositif pour la mise en oeuvre du procédé selon l'invention. Ce dispositif est **caractérisé en ce qu**'il comprend :
- des moyens pour interrompre l'injection de carburant dans le tube d'échappement lorsque le fonctionnement du moteur entre dans ladite zone critique,
- des moyens pour rétablir de nouveau l'injection de carburant lorsque le fonctionnement du moteur est revenu dans une zone non critique,
- des moyens pour mesurer ou estimer, lors des phases de fonctionnement transitoires, le débit volumique des gaz d'échappement,
- des moyens pour commander l'injection de carburant lorsque le débit volumique des gaz d'échappement est revenu en-dessous d'un seuil prédéterminé,
- ou des moyens pour corriger le débit maximum d'injection de carburant en fonction du débit volumique des gaz d'échappement.

De préférence, le dispositif comprend un débitmètre disposé sur le tube d'échappement ou un estimateur du débit volumique des gaz d'échappement.

Dans une première version du dispositif, les moyens de mesure du débit volumique des gaz d'échappement coopèrent avec un module d'hystérésis pour commander l'injection de carburant.

Dans une seconde version, les moyens pour corriger le débit maximum d'injection comprennent une cartographie qui coopère avec les moyens de mesure du débit volumique des gaz d'échappement.

D'autres particularités et avantages de l'invention apparaîtront encore tout au long de la description ci-après.

Aux dessins annexés, donnés à titre d'exemples, non limitatifs :
- la figure 1 est un schéma général d'un dispositif connu de régénération d'un filtre à particules,
- la figure 2 est un schéma général du système d'admission et d'échappement d'un moteur thermique diesel turbocompressé,
- la figure 3 est une courbe montrant l'évolution de la charge C du moteur en fonction de son régime R et illustrant deux zones de fonctionnement du moteur,
- la figure 4 est un schéma illustrant une première réalisation du dispositif selon l'invention,
- la figure 5 est un schéma illustrant une seconde réalisation du dispositif selon l'invention.

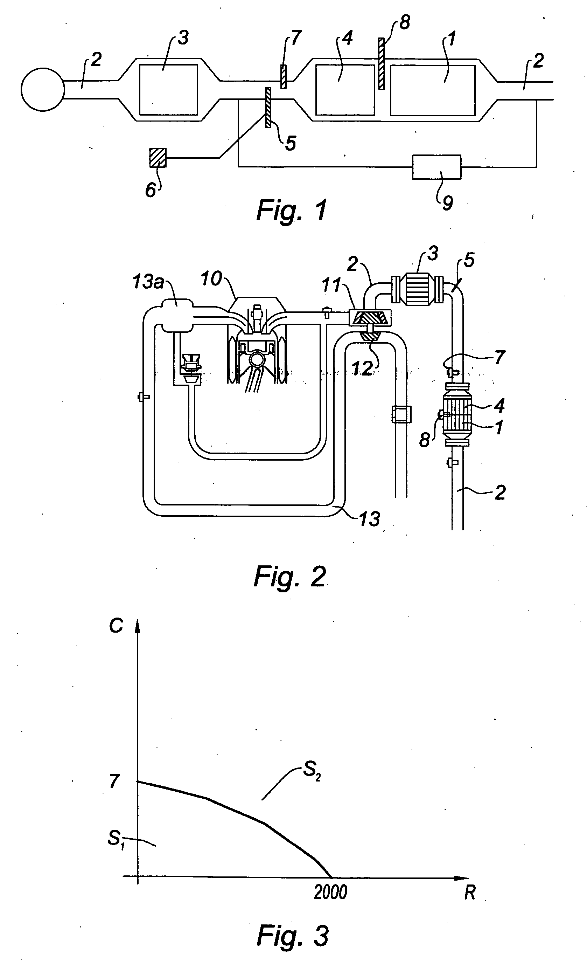

La figure 1 illustre schématiquement un dispositif de dépollution des gaz d'échappement d'un moteur thermique de type diesel, tel que décrit dans la demande de brevet français FR0453187 du 23 décembre 2004.

Ce dispositif comprend un filtre à particules 1 disposé sur la ligne d'échappement 2 du moteur thermique, sur laquelle sont placés, un premier catalyseur d'oxydation 3 situé près du moteur et un second catalyseur d'oxydation 4 situé juste en amont du filtre à particules 1.

En amont du second catalyseur d'oxydation 4, est placé un injecteur de gasole 5 relié à une pompe 6 qui permet d'injecter du gasole dans la ligne d'échappement 2 dont la combustion permet d'élever la température du catalyseur d'oxydation 4 pendant les phases de régénération du filtre à particules 1.

En amont du catalyseur 4 et entre celui-ci et le filtre 1 sont disposés des capteurs de température 7, 8.

La référence 9 désigne un capteur permettant de mesurer la pression différentielle entre l'entrée du catalyseur 4 et la sortie du filtre 1.

La régénération du filtre 1 est déclenchée lorsque la pression différentielle mesurée par le capteur 9 atteint un certain seuil. Dans ce cas, du gasole est injecté par l'injecteur 5 dans la ligne d'échappement. La combustion du gasole élève la température du catalyseur jusqu'à environ 650°C ce qui permet de brûler les particules de suie présentes dans le filtre 1.

La figure 2 représente un moteur diesel 10 comprenant un turbocompresseur 11 dont le compresseur 12 permet de comprimer l'air dans la tubulure d'admission 13 qui est reliée au collecteur d'admission 13a du moteur 10.

En aval du turbocompresseur 11, la ligne d'échappement 2 comprend le dispositif représenté sur la figure 1, à savoir successivement un premier catalyseur d'oxydation 3, un injecteur de gasole 5, un second catalyseur d'oxydation 4 et le filtre à particules 1. Un capteur de température 7 est disposé près de l'entrée du catalyseur d'oxydation 4.

Cependant, la Demanderesse a constaté que la régénération ne pouvait pas être mise en oeuvre dans toutes les zones de fonctionnement du moteur à combustion interne.

Ainsi, la courbe de la figure 3 fait apparaître deux zones S1 et S2. La plage de fonctionnement S1 est limitée par des valeurs maximales de charge et de régime, c'est-à-dire par un ensemble de couples charge-régime définissant pour une charge (ou pour un couple) déterminée, une valeur maximale de couple (ou de charge, respectivement). Dans la zone S1, le fonctionnement du moteur est situé en dessous d'une charge C et d'un régime R définis par la courbe. Dans la zone S2, le fonctionnement du moteur est au contraire situé au-dessus des valeurs de charge C et de régime définis par la courbe.

Conformément au procédé décrit dans une demande de brevet déposée par la Demanderesse, le même jour que la présente demande, lors de la régénération :
- l'injection de carburant dans le tube d'échappement est interrompue lorsque le fonctionnement du moteur entre dans zone critique S2 et,
- l'injection de carburant est de nouveau rétablie lorsque le fonctionnement du moteur revient dans une zone non critique S1.

Lorsque le moteur se trouve dans la zone S1, la température de consigne à l'entrée du catalyseur d'oxydation est réglée à une valeur comprise entre 250 et 550°C.

Lorsque le moteur entre dans la zone critique S2, l'injection de carburant étant interrompue, la température de consigne ci-dessus est réglée à 650°C.

Ce procédé permet de garantir la régénération du filtre à particules sur l'ensemble de la plage de fonctionnement du moteur. Cependant, lors d'une utilisation très transitoire du véhicule, on observe, à la sortie du catalyseur d'oxydation, des pics d'hydrocarbures imbrûlés très supérieurs au niveau attendu en régime établi, ce qui peut aboutir à des emballements de la régénération du filtre à particules et éventuellement à sa destruction. Ces pics sont par ailleurs indésirables pour le respect des normes de dépollution.

Le procédé décrit dans la présente invention a pour objectif de réduire ces émissions d'hydrocarbures à la sortie du catalyseur d'oxydation lors des phases transitoires.

Lors des phases d'utilisation transitoires du véhicule, on distingue deux cas particuliers de fonctionnement :
1. Le moteur est dans la zone S1 d'utilisation de l'injecteur à l'échappement depuis plusieurs minutes. La ligne d'échappement en amont du catalyseur d'oxydation se trouve à une température comprise entre 250°C et 550°C et le conducteur décide d'accélérer le moteur. Pour cela la charge C du moteur augmente instantanément et le régime R augmente lorsque le véhicule accélère. Si la demande d'accélération est très forte, le moteur sort de la zone S1 d'utilisation de l'injecteur. La ligne d'échappement en amont du catalyseur d'oxydation doit alors atteindre 650°C. La température en entrée du catalyseur n'augmente cependant que progressivement, le temps que la ligne d'échappement en amont du catalyseur se réchauffe et atteigne la température de 650°C.
2. Le moteur est depuis plusieurs minutes dans la zone S2 où l'injecteur à l'échappement n'est pas utilisé, par exemple parce que le véhicule se trouve dans une pente forte (demande de charge importante pour le moteur). La ligne d'échappement en amont du catalyseur d'oxydation est à 650°C. Si la pente devient moins forte, la charge du moteur nécessaire pour maintenir la vitesse du véhicule est alors plus faible et revient dans la zone S1 d'utilisation de l'injecteur à l'échappement. Etant donné l'inertie thermique de la ligne d'échappement, la température en entrée du catalyseur ne passe pas immédiatement de 650°C à la valeur cible, c'est-à-dire entre 250°C et 550°C.

La capacité de traitement des hydrocarbures du catalyseur d'oxydation est liée en particulier au débit volumique des gaz d'échappement qui passent à travers le catalyseur. Plus le débit volumique est important, plus les hydrocarbures en sortie du catalyseur sont importants.

Au moment d'entrer dans la zone S1 d'utilisation de l'injecteur à l'échappement, le débit volumique est plus important que celui qu'on a en fonctionnement stationnaire du moteur. C'est à ce moment qu'on dépasse la capacité de traitement des hydrocarbures par le catalyseur. Le temps que la température à l'entrée du catalyseur atteigne sa consigne et donc que le débit volumique revienne à la valeur en régime stationnaire, des hydrocarbures passent à travers le catalyseur.

On constate donc que c'est l'écart entre le débit volumique en régime transitoire et le débit volumique en régime établi qui est à l'origine des pics d'hydrocarbures. Pour pallier ce problème, il est donc nécessaire d'agir sur le débit volumique ou du moins le prendre en compte.

Ainsi, conformément au procédé de l'invention :
- lors des phases de fonctionnement transitoires entre les deux zones S1 et S2 on mesure ou on estime le débit volumique des gaz d'échappement et en fonction de cette mesure, on réduit le débit d'injection de carburant ou on diffère l'injection de carburant.

Pratiquement, on ne rétablit l'injection de carburant qu'une fois le débit volumique des gaz d'échappement revenu en-dessous d'un seuil prédéterminé.

On peut également appliquer une correction sur le débit maximum d'injection de carburant en fonction du débit volumique des gaz d'échappement. Le dispositif pour mettre en oeuvre le procédé ci-dessus comprend :
- des moyens pour interrompre l'injection de carburant dans le tube d'échappement lorsque le fonctionnement du moteur entre dans la zone critique S2,
- des moyens pour rétablir de nouveau l'injection de carburant lorsque le fonctionnement du moteur est revenu dans une zone non critique S1,
- des moyens tels qu'un débitmètre pour mesurer, lors des phases de fonctionnement transitoires, le débit volumique des gaz d'échappement,
- des moyens pour commander l'injection de carburant lorsque le débit volumique des gaz d'échappement est revenu en-dessous d'un seuil prédéterminé,
- ou des moyens pour corriger le débit maximum d'injection de carburant en fonction du débit volumique des gaz d'échappement.

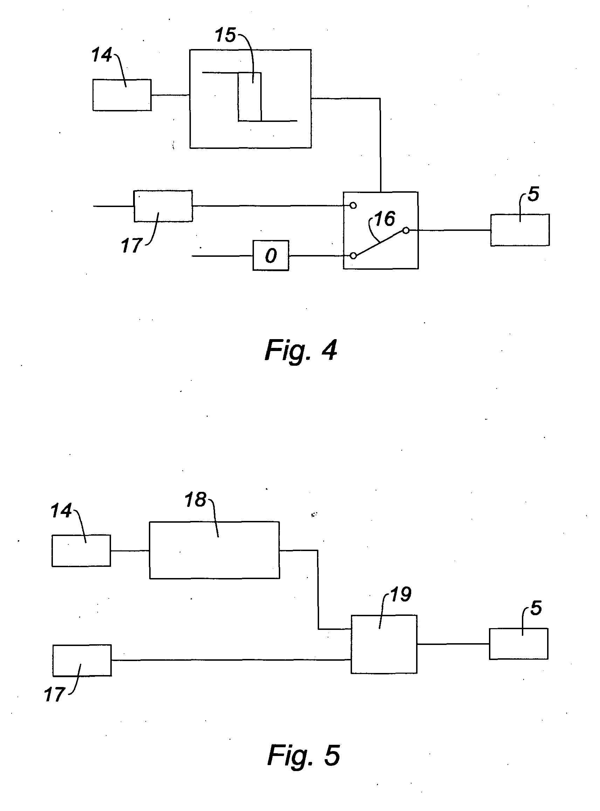

Le schéma de la figure 4 montre que le débitmètre 14 qui mesure le débit volumique du gaz d'échappement coopère avec un module d'hystérésis 15 pour commander l'injection de gasole par l'injecteur 5.

Lorsque le débit volumique des gaz d'échappement est supérieur au deuxième seuil du module d'hystérésis 15, la sortie de ce module d'hystérésis devient égale à 0 et le sélecteur 16 bascule vers zéro, imposant une valeur de zéro pour la commande 17 de débit de l'injecteur 5.

Lorsque le débit volumique de gaz d'échappement repasse en dessous du premier seuil du module d'hystérésis 15, la sortie de ce module d'hystérésis devient égale à un et le sélecteur 16 bascule vers la position qui autorise la commande 17 à déclencher l'injection de carburant par l'injecteur 5.

Les deux seuils du module d'hystérésis peuvent éventuellement être programmés sur une cartographie en fonction de la charge et du régime du moteur.

L'utilisation d'un module d'hystérésis permet d'obtenir une activation et une coupure nettes de l'injection de carburant dans le tube d'échappement.

Le schéma de la figure 5 illustre des moyens pour corriger le débit maximum d'injection de carburant. Ces moyens comprennent une cartographie 18 qui coopère avec le débitmètre 14 qui mesure le débit volumique des gaz d'échappement et avec un bloc MIN 19 qui permet de saturer le débit de l'injecteur 5 en fonction du débit volumique des gaz d'échappement.

## Revendications

1. Procédé de régénération du filtre à particules (1) placé sur la ligne d'échappement (2) d'un moteur à combustion interne (10), dans lequel, pendant la régénération du filtre à particules (1), du carburant est injecté dans le tube d'échappement (2) en amont d'un catalyseur d'oxydation (4) disposé en amont du filtre à particules (1), **caractérisé en ce que** lors de la régénération :
- l'injection de carburant dans le tube d'échappement est interrompue lorsque le fonctionnement du moteur entre dans une zone critique (S2) définie par des limites maximales de charge et de régime,
- l'injection de carburant est de nouveau rétablie lorsque le fonctionnement du moteur revient dans une zone non critique (S1)
- lors des phases de fonctionnement transitoires entre les deux zones (S1, S2), on mesure la débit volumique des gaz d'échappement et en fonction de cette mesure, on réduit le débit d'injection de carburant ou on diffère l'injection de carburant.

2. Procédé selon la revendication 1, **caractérisé en ce que** l'on rétablit l'injection de carburant une fois le débit volumique des gaz d'échappement revenu en dessous d'un seuil prédéterminé.

3. Procédé selon la revendication 1, **caractérisé en ce que** l'on applique une correction sur le débit maximum d'injection de carburant en fonction du débit volumique des gaz d'échappement.

4. Dispositif pour la mise en oeuvre du procédé selon l'une des revendications 1 à 3, **caractérisé en ce qu'**il comprend :
- des moyens pour interrompre l'injection de carburant dans le tube d'échappement (2) lorsque le fonctionnement du moteur (10) entre dans ladite zone critique (S2),
- des moyens pour rétablir de nouveau l'injection de carburant lorsque le fonctionnement du moteur est revenu dans une zone non critique (S1),
- des moyens pour mesurer ou estimer, lors des phases de fonctionnement transitoires, le débit volumique des gaz d'échappement,
- des moyens pour commander l'injection de carburant lorsque le débit volumique des gaz d'échappement est revenu en dessous d'un seuil prédéterminé,
- ou des moyens pour corriger le débit maximum d'injection de carburant en fonction du débit volumique des gaz d'échappement.

5. Dispositif selon la revendication 4, **caractérisé en ce qu'**il comprend un débitmètre (14) disposé sur le tube d'échappement ou un estimateur du débit volumique des gaz d'échappement.

6. Dispositif selon la revendication 4, **caractérisé en ce que** les moyens de mesure du débit volumique des gaz d'échappement coopèrent avec un module d'hystérésis (15) pour commander l'injection de carburant.

7. Dispositif selon la revendication 6, **caractérisé en ce que** les deux seuils du module d'hystérésis (15) sont réglés en fonction du régime et de la charge du moteur.

8. Dispositif selon la revendication 4, **caractérisé en ce que** les moyens pour corriger le débit maximum d'injection comprennent une cartographie (18) qui coopère avec les moyens de mesure du débit volumique des gaz d'échappement.

## Claims

1. Method for regenerating a particle filter (1) positioned in the exhaust line (2) of an internal combustion engine (10), in which method, while the particle filter (1) is being regenerated, fuel is injected into the exhaust tube (2) upstream of an oxidation catalytic converter (4) positioned upstream of the particle filter (1), **characterized in that,** during regeneration:
- the injection of fuel into the exhaust tube is interrupted when the engine operation enters a critical zone (S2) defined by speed and load upper limits,
- injection of fuel is resumed when engine operation returns to a non-critical zone (S1)
- during transient phases of operation between the two zones (S1, S2) the volume flow rate of exhaust gases is measured and the fuel injection flow rate is reduced or the injection of fuel is deffered on the basis of this measurement.

2. Method according to Claim 1, **characterized in that** fuel injection is resumed once the volume flow rate of exhaust gases has dropped back below a predetermined threshold.

3. Method according to Claim 1, **characterized in that** a correction is applied to the maximum flow rate at which fuel is injected, on the basis of the volume flow rate of exhaust gases.

4. Device for implementing the method according to one of Claims 1 to 3, **characterized in that** it comprises:
- means for interrupting the injection of fuel into the exhaust tube (2) when the operation of the engine (10) enters said critical zone (S2),
- means for resuming fuel injection when engine operation has returned to a non-critical zone (S1),
- means for measuring or estimating the volume flow rate of exhaust gases during the transient phases of operation,
- means for controlling the injection of fuel when the volume flow rate of exhaust gases has dropped back below a predetermined threshold,
- or means for correcting the maximum flow rate at which fuel is injected on the basis of the volume flow rate of the exhaust gases.

5. Device according to Claim 4, **characterized in that** it comprises a flow meter (14) positioned on the exhaust tube or equipment that estimates the volume flow rate of the exhaust gases.

6. Device according to Claim 4, **characterized in that** the means of measuring the volume flow rate of the exhaust gases interface with a hysteresis module (15) for controlling the injection of fuel.

7. Device according to Claim 6, **characterized in that** the two thresholds of the hysteresis module (15) are set on the basis of the engine speed and load.

8. Device according to Claim 4, **characterized in that** the means for correcting the maximum injection flow rate comprise a map (18) which interfaces with the means of measuring the volume flow rate of the exhaust gases.

## Patentansprüche

1. Verfahren zur Regenerierung des in der Auspuffleitung (2) eines Verbrennungsmotors (10) angeordneten Partikelfilters (1), wobei während der Regenerierung des Partikelfilters (1) vor einem Oxidationskatalysator (4), der vor dem Partikelfilter (1) angeordnet ist, Kraftstoff in das Auspuffrohr (2) eingespritzt wird, **dadurch gekennzeichnet, dass** bei der Regenerierung:
- die Kraftstoffeinspritzung in das Auspuffrohr unterbrochen wird, wenn der Betrieb des Motors in einen kritischen Bereich (S2) eintritt, der durch maximale Last- und Drehzahlgrenzen definiert wird,
- die Kraftstoffeinspritzung wiederhergestellt wird, wenn der Betrieb des Motors wieder in einen unkritischen Bereich (S1) zurückkehrt,
- in den Übergangsbetriebsphasen zwischen den zwei Bereichen (S1, S2) der Abgasvolumenstrom gemessen wird und abhängig von dieser Messung die Kraftstoffeinspritzmenge verringert wird oder der Kraftstoffeinspritzzeitpunkt verzögert wird.

2. Verfahren nach Anspruch 1, **dadurch gekennzeichnet, dass** die Kraftstoffeinspritzung wiederhergestellt wird, sobald der Abgasvolumenstrom wieder unter einen vorbestimmten Schwellenwert abgefallen ist.

3. Verfahren nach Anspruch 1, **dadurch gekennzeichnet, dass** abhängig vom Abgasvolumenstrom eine Korrektur an der maximalen Kraftstoffeinspritzmenge durchgeführt wird.

4. Vorrichtung zur Durchführung des Verfahrens nach einem der Verfahren 1 bis 3, **dadurch gekennzeichnet, dass** es umfasst:
- Mittel, um die Kraftstoffeinspritzung in das Auspuffrohr (2) zu unterbrechen, wenn der Betrieb des Motors (10) in den kritischen Bereich (S2) eintritt,
- Mittel, um die Kraftstoffeinspritzung wiederherzustellen, wenn der Betrieb des Motor wieder in eine unkritische Zone (S1) zurückgekehrt ist,
- Mittel, um in den Übergangsbetriebsphasen den Abgasvolumenstrom zu messen oder zu schätzen,
- Mittel, um die Kraftstoffeinspritzung zu bewirken, wenn der Abgasvolumenstrom wieder unter einen vorbestimmten Schwellenwert abgefallen ist,
- oder Mittel, um die maximale Kraftstoffeinspritzmenge abhängig vom Abgasvolumenstrom zu korrigieren.

5. Vorrichtung nach Anspruch 4, **dadurch gekennzeichnet, dass** sie einen im Auspuffrohr angeordneten Strömungsmesser (14) oder einen Abgasvolumenstromschätzer umfasst.

6. Vorrichtung nach Anspruch 4, **dadurch gekennzeichnet, dass** die Mittel zur Messung des Abgasvolumenstroms mit einem Hysteresemodul (15) zusammenwirken, um die Kraftstoffeinspritzung zu bewirken.

7. Vorrichtung nach Anspruch 6, **dadurch gekennzeichnet, dass** die zwei Schwellenwerte des Hysteresemoduls (15) von der Drehzahl und der Last des Motors abhängig eingestellt sind.

8. Vorrichtung nach Anspruch 4, **dadurch gekennzeichnet, dass** die Mittel zur Korrektur der maximalen Einspritzmenge eine Kartographie (18) umfassen, die mit den Mitteln zur Messung des Abgasvolumenstroms zusammenwirkt.
